(19) Europäisches Patentamt

European Patent Office

Office européen des brevets

(11) **EP 0 790 729 B1**

(12) **FASCICULE DE BREVET EUROPEEN**

(45) Date de publication et mention
de la délivrance du brevet:
**04.10.2006 Bulletin 2006/40**

(51) Int Cl.:
***H04L 27/227*** *(2006.01)*

(21) Numéro de dépôt: **97400332.9**

(22) Date de dépôt: **14.02.1997**

(54) **Dispositif de correction de bruit de phase dans un récepteur numérique**

Korrektur von Phasenrauschen einer PLL in einem PSK- oder QAM-Empfänger

Correction of PLL phase noise in PSK or QAM receivers

(84) Etats contractants désignés:
**DE FR GB IT**

(30) Priorité: **16.02.1996 FR 9601923**

(43) Date de publication de la demande:
**20.08.1997 Bulletin 1997/34**

(73) Titulaire: **THOMSON multimedia**
**92648 Boulogne Cédex (FR)**

(72) Inventeur: **Boie, Werner**
**92050 Paris La Defense Cedex (FR)**

(74) Mandataire: **Ruellan-Lemonnier, Brigitte et al**
**THOMSON multimedia,**
**46 quai A. Le Gallo**
**92648 Boulogne Cédex (FR)**

(56) Documents cités:
**US-A- 3 787 775         US-A- 5 109 532**

• **PATENT ABSTRACTS OF JAPAN vol. 012, no. 367
(E-664), 30 Septembre 1988 & JP 63 119306 A
(HITACHI LTD;OTHERS: 01), 24 Mai 1988,**

EP 0 790 729 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

La présente invention se situe dans le domaine des transmissions numériques de l'information et concerne particulièrement un récepteur numérique comportant un étage mélangeur recevant une porteuse S(t) et délivrant à un étage de démodulation un signal de fréquence intermédiaire $S_{FI}(t)$ obtenu par combinaison de la porteuse reçue et d'un signal $S_{Lo}(t)$ de pulsation $w_{Lo}$ généré par un circuit PLL.

Dans ce type de récepteurs, le circuit PLL est généralement source d'un bruit de phase qui s'ajoute au signal $S_{FI}(t)$ et qui provoque une détérioration de la qualité des informations transmises. En effet, un bruit de phase excessif accroît le taux d'erreur dans le signal démodulé notamment dans les dispositifs de transmission utilisant une modulation QPSK (Quadriphase shift keying en langue anglaise) ou une modulation du type QAM (Quadrature amplitude modulation en langue anglaise).

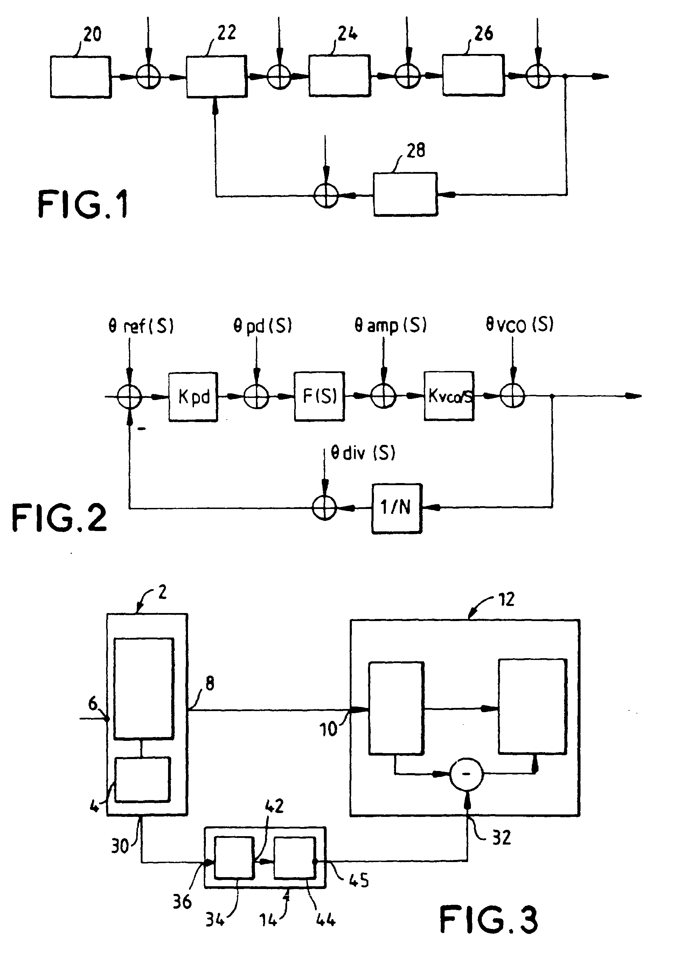

La figure 1 représente schématiquement un circuit à boucle à verrouillage de phase utilisé dans les récepteurs connus. Le bruit dé phase total généré par un tel circuit résulte de la contribution des éléments qui le constituent tels qu'un oscillateur de référence, un oscillateur contrôlé en tension VCO (Voltage controlled oscillator en langue anglaise), un détecteur de phase, un amplificateur opérationnel de filtrage et parfois un diviseur. Généralement, on considère que la source majeure du bruit de phase est constituée par le VCO. En effet, cet élément comporte une diode à capacité variable (Varactor en langue anglaise) ayant une résistance équivalente qui provoque une tension de bruit produisant une modulation de la tension aux bornes dudit varactor. Ce bruit prédomine dans le VCO sur une large gamme de fréquences d'oscillation.

Le brevet US-A-5,109,532 dévoile un dispositif de compensation de bruit de phase dans lequel on prélève le bruit de phase généré par le circuit de PLL pour le compenser par contre-réaction dans l'étage de transposition. La compensation ainsi réalisée ne peut être totale car le bruit de phase compensé est limité par l'évolution du bruit de phase pendant la durée de contre-réaction.

Le but de l'invention est de supprimer le bruit de phase généré par le circuit PLL dans les récepteurs numériques.

Selon l'invention, le récepteur numérique comporte un étage de correction numérique du bruit de phase destiné à prélever le signal de bruit $\varphi_n(t)$ généré par le circuit PLL dans l'étage mélangeur et à compenser ledit bruit $\varphi_n(t)$ dans l'étage de démodulation.

Grâce à l'étage de correction de bruit, le signal démodulé est exempt d'erreur permettant ainsi d'améliorer la qualité des informations transmises.

D'autres caractéristiques et avantages de l'invention ressortiront de la description qui va suivre, prise à titre d'exemple non limitatif, en référence aux figures annexées, dans lesquelles :

-    la figure 1 représente schématiquement un circuit à boucle à verrouillage de phase utilisé dans les récepteurs de l'art antérieur ;
-    la figure 2 représente un schéma équivalent du circuit de la figure 1 ;
-    la figure 3 représente un schéma bloc d'un récepteur selon l'invention, et
-    la figure 4 représente un récepteur selon un mode de réalisation préféré de l'invention.

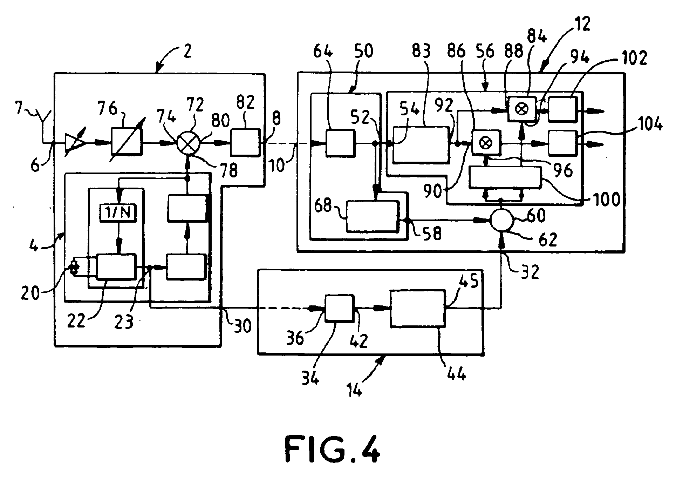

Comme on peut le voir sur les figures 3 et 4, le récepteur numérique comporte un étage mélangeur 2 muni d'un circuit à boucle à verrouillage de phase (PLL) 4. Une entrée 6 dudit étage mélangeur 2 reçoit une porteuse modulée S(t) délivrée par une antenne 7 et une première sortie 8 de l'étage mélangeur 2 délivre un signal de fréquence intermédiaire $S_{FI}(t)$ à une première entrée 10 d'un étage de démodulation 12.

Selon une première caractéristique essentielle de l'invention, le récepteur numérique comporte en outre un étage 14 de correction de bruit de phase destiné à prélever un signal de bruit $\varphi_n(t)$ généré par le circuit PLL 4 dans l'étage mélangeur 2 et à compenser ledit bruit $\varphi_n(t)$ dans l'étage de démodulation 12.

Les figures 1 et 2 permettent de mettre en évidence la contribution de chaque élément constituant le circuit PLL 4. En effet, en désignant par $H_{lo}(j\omega)$ la fonction de transfert en boucle ouverte du circuit schématisé par la figure 2, le bruit de phase total est donné par l'expression :

$$\theta_{tot}(j\omega) = \left|\frac{1}{1-H(j\omega)}\right|^2 \times (\theta_{vco}(j\omega) + \theta_{amp}(j\omega) \times (\frac{K_{vco}}{\omega^2}) + \theta_{pd}(j\omega) \times$$

$$\frac{|K_{vco}F(j\omega)|^2}{\omega^2} + \theta_{ref}(j\omega)N^2|H_{lo}(j\omega)|^2 + \theta_{div}(j\omega)|H_{lo}(j\omega)|^2$$

où

$\theta_{ref}(j\omega)$ $N^2$ $|H_{lo}(j\omega)|^2$ représente la contribution d'un oscillateur de référence 20, et
$\theta_{pd}(j\omega)$ $|K_{vco}(j\omega)|^2/_{\omega}{}^2$ représente la contribution d'un détecteur de phase 22,
$\theta_{amp}(j\omega)(K_{vco}/\omega)^2$ représente la contribution d'un amplificateur opérationnel de filtrage 24,
$\theta_{vco}(j\omega)$ représente la contribution du VCO 26, et
$\theta_{div}(j\omega)$ $|H_{lo}(j\omega)|^2$ représente la contribution d'un diviseur 28,

*avec*

$$H_{lo}(j\omega) = \frac{K_{pd}K_{vco}F}{N(j\omega)}$$

et avec $K_{pd}$ et $K_{vco}$ représentant respectivement un coefficient d'amplification du détecteur de phase 22 et un coefficient d'amplification du VCO 24, $F(j\omega)$ représentant la fonction de transfert de l'amplificateur de filtrage 24.

En considérant que le bruit de phase total résulte essentiellement de la contribution du VCO 26, l'expression précédente peut être simplifiée et remplacée par :

$$\theta'_{tot}(j\omega) = \frac{\theta_{vco}(j\omega)}{\left|1-H_{lo}(j\omega)\right|^2} = \theta_{vco}(j\omega)(N\omega)^2 \times \frac{1}{\left|N(j\omega) + K_{pd}K_{vco}F(j\omega)\right|^2}$$

L'analyse de cette expression montre que le bruit de phase total mesurable après le détecteur de phase 22 est donné par l'expression :

$$\theta''_{tot}(j\omega) = (\frac{K_{pd}}{N})\theta_{vco}(j\omega) \times \frac{1}{\left|1-H_{lo}(j\omega)\right|^2}$$

$$= \frac{K_{pd}}{N} \cdot \theta'_{tot}(j\omega) \qquad\qquad (E)$$

Il en résulte que ledit bruit de phase $\theta''_{tot}(j\omega)$ peut être mesuré à une sortie 23 du détecteur 22 en tenant compte du facteur d'amplification $K_{pd}$ dudit détecteur de phase 22 et du facteur de division N.

Selon un mode de réalisation préféré de l'invention, représenté à la figure 3 et à la figure 4, l'étage 14 de correction de bruit de phase est agencé entre une deuxième sortie 30 de l'étage mélangeur 2 et une deuxième entrée 32 de l'étage de démodulation 12 et comporte un premier convertisseur analogique numérique 34 dont une entrée 36 est reliée à la sortie 23 du détecteur de phase 22 intégré au circuit PLL 4, et dont une sortie 42 est reliée à un premier module de calcul 44 destiné à fournir à l'étage de démodulation 12 un signal $\varphi_c(t)$ de compensation du bruit de phase $\varphi_n(t)$.

Le premier moyen de calcul 44 permet de multiplier la valeur délivrée par le convertisseur analogique-numérique 34 par le rapport $\dfrac{N}{K_{pd}}$ de manière à délivrer à sa sortie 45 un signal de compensation $\theta\, c^{(t)}$ équivalent au signal de bruit $\theta'_n(t)$.

Comme on peut le voir à la figure 4, l'étage de démodulation 12 comporte un deuxième module de calcul 50 destiné à déterminer la phase $\omega t$ du signal $S_{FI}(t)$ reçu de l'étage mélangeur 2. Ledit module de calcul 50 a une première sortie 52 reliée à une première entrée 54 d'un bloc démodulateur synchrone 56 et une deuxième sortie 58 reliée à un soustracteur 60 recevant simultanément le signal de compensation $\varphi_c(t)$ a une entrée 62 et délivrant au bloc démodulateur 56 la différence $\Delta\varphi$ donnée par l'expression:

$$\Delta\varphi \;=\; \omega_{FI} \cdot t - \varphi_c(t).$$

Le module de calcul 50 comporte un deuxième convertisseur analogique-numérique 64 associé à un filtre 68 connu en soi permettant de récupérer la phase instantanée d'un signal.

L'étage mélangeur 2 du récepteur, comme cela est représenté à la figure 4, comporte un premier multiplieur 72 dont une première entrée 74 reçoit de l'antenne 7, via un moyen d'amplification/filtrage 76, une porteuse radiofréquence $S_{RF}(t)$ donnée par l'expression :

$$S_{RF}(t) \;=\; S_p(t)\, \mathrm{Cos}\, \omega_o.t \;+\; S_q(t)\, \mathrm{Sin}\, \omega_o.t$$

où $S_p(t)$ et $S_q(t)$ représentent respectivement une composante en phase et une composante en quadrature d'un signal QPSK ou d'un signal QAM. Une deuxième entrée 78 dudit multiplieur 72 reçoit un signal $S_{lo}(t)$ généré par le circuit PLL 4 tandis qu'une sortie 80 dudit multiplieur 72 délivre le signal $S_{FI}(t)$ à l'étage de démodulation 12 via un premier filtre passe-bas 82.

Comme on peut le voir sur la figure 4, le bloc démodulateur 56 comporte un filtre demi-Nyquist 83 relié au deuxième convertisseur analogique-numérique 64, un deuxième multiplieur 84 et un troisième multiplieur 86 ayant, respectivement, d'une part, une première entrée 88 et une première entrée 90 reliées à une sortie 92 dudit filtre demi-Nyquist 83, et d'autre part, respectivement, une deuxième entrée 94 et une deuxième entrée 96 reliées à un moyen de mémorisation 100 destiné à stocker la différence de phase $\Delta\varphi$. Le deuxième multiplieur 84 délivre, via un filtre passe-bas 102, une composante en phase démodulée

$$S_{ld}(t) \;=\; S_{FI}(t) \times 2\cos(\omega_{FI}(t) - \varphi_c(t))$$

tandis que le troisième multiplieur 86 délivre, via un deuxième filtre passe-bas 104, une composante en quadrature démodulée

$$S_{Qd}(t) \;=\; S_{FI}(t) \times 2\,\mathrm{Sin}\,(\omega_{FI}(t) - \varphi_c(t)).$$

Ainsi, lorsque la porteuse modulée $S_{RF}(t)$ est reçue par l'étage mélangeur 2, elle est convertie en un signal de fréquence intermédiaire $S_{FI}(t)$ donné par l'expression :

$$S_{FI}(t) = S_p(t)\left[\cos((\omega_O + \omega_{lo})t + \varphi_n(t)) + Cos((\omega_O - \omega_{lo})t - \varphi_n(t)\right]$$
$$+ S_q(t)\left[Sin((\omega_O + \omega_{lo})t + \varphi_n(t) + Sin((\omega_O - \omega_{lo})t - \varphi_n(t))\right]$$

Après filtrage, le signal recueilli a pour expression :

$$S_{FFI}(t) = S_p(t)Cos((\omega_O - \omega_{lo})t - \varphi_n(t)) + S_q(t)Sin((\omega_O - \omega_{lo})t - \varphi_n(t))$$

*soit, en posant* $\omega_o - \omega_{lo} = \omega_{FI}$

$$S_{FFI}(t) = S_p(t)Cos(\omega_{FI}.t - \varphi_n(t)) + S_q(t)Sin(\omega_{FI}.t - \varphi_n(t))$$

le signal $S_{FFI}(t)$ est ensuite appliqué à l'étage démodulateur 12 de manière à recueillir la composante en phase démodulée $S_{Id}(t)$ et la composante en quadrature démodulée $S_{qd}(t)$.
La composante en phase démodulée est donnée par l'expression :

$$S_{Id}(t) = S_{FFI}(t).2\,Cos(\omega_{FI}.t - \varphi_c(t))$$

$$S_{Id} = S_p(t)\left[Cos(2\omega_{FI}(t) - \varphi_n(t) - \varphi_c(t)) + Cos(-\varphi_n(t) + \varphi_c(t))\right]$$
$$+ S_q(t)\left[Sin(2\omega_{FI} - \varphi_n(t) - \varphi_c(t) + Sin(-\varphi_n(t) + \varphi_c(t))\right]$$

Soit, après filtrage par le filtre passe-bas 102 :

$$S_{FId}(t) = S_p(t)Cos(-\varphi_n(t) + \varphi_c(t)) + S_q(t)Sin(-\varphi_n(t) + \varphi_c(t))$$

De même, la composante ou quadrature démodulée est donnée par l'expression :

$$S_{Qd}(t) = S_{FFI}(t).2Sin(\omega_{FI}(t) - \varphi_c(t))$$

$$S_{Qd}(t) = S_p(t).\left[Sin(2\omega_{FI}(t) - \varphi_n(t) - \varphi_c(t) + Sin(\varphi_n(t) - \varphi_c(t))\right.$$

$$\left. + S_q(t)\left[-Cos(2\omega_{FI}.t - \varphi_n(t) - \varphi_c(t)) + Cos(-\varphi_n(t) + \varphi_c(t))\right]\right]$$

Soit après filtrage par le filtre passe-bas 104 :

$$S_{FQd}(t) = S_p(t)Sin(\varphi_n(t) - \varphi_c(t)) + S_q(t)Cos(-\varphi_n(t) + \varphi_c(t))$$

avec

$$\Delta\varphi = \varphi_n(t) - \varphi_c(t)$$

donc

$$S_{FId}(t) = S_p(t)Cos(\Delta\varphi(t)) + S_q(t)Sin(\Delta\varphi(t))$$

et

$$S_{FQd}(t) = -S_p(t)Sin(\Delta\varphi(t)) + S_q(t)Cos(\Delta\varphi(t))$$

Idéalement, le bruit de phase $\varphi_n(t)$ est égal au bruit de compensation $\varphi_c(t)$ calculé dans l'étage de correction 14.
Dans ce cas :

$$S_{FId}(t) = S_p(t) \ et \ S_{FQd}(t) = S_q(t)$$

**Revendications**

1. Récepteur numérique comportant un étage mélangeur (2) recevant une porteuse S(t) et délivrant à un étage de démodulation (12) un signal de fréquence intermédiaire $S_{FI}(t)$ obtenu par combinaison de la porteuse reçue et d'un signal généré par un circuit PLL (4), **caractérisé en ce qu'**il comporte en outre un étage (14) de correction numérique de bruit de phase, ledit étage prélevant un signal de bruit $\varphi_n(t)$ généré par le circuit PLL (4) dans l'étage mélangeur (2) et compensant ledit bruit $\varphi_n(t)$ dans l'étage de démodulation (12).

2. Récepteur selon la revendication 1 , **caractérisé en ce que** l'étage (14) de correction de bruit de phase comporte un premier convertisseur analogique-numérique (34) dont une entrée (36) est reliée à une sortie (23) d'un détecteur de phase (22) intégré au circuit PLL (4), et dont une sortie (42) est reliée à un module de calcul (44) destiné à fournir à l'étage de démodulation (12) un signal $\varphi_c(t)$ de compensation du bruit de phase $\varphi_n(t)$.

3. Récepteur selon la revendication 2, **caractérisé en ce que** l'étage de démodulation (12) comporte un deuxième module de calcul (50) destiné à déterminer la phase $\omega_{FI}.t$ du signal $S_{FI}(t)$, ayant une première sortie (52) reliée à une première entrée (54) d'un bloc démodulateur (56) et une deuxième sortie (58) reliée à un soustracteur (60); ledit soustracteur (60) reçoit le signal $\varphi_c(t)$ à une entrée (62) et délivre au bloc démodulateur (56) la différence $\Delta\varphi = \omega_{FI}.t - \varphi_c(t)$.

4. Récepteur selon la revendication 3, **caractérisé en ce que** le deuxième module de calcul (50) comporte un deuxième convertisseur analogique-numérique (64) associé à un filtre (68).

5. Récepteur selon les revendications 1 à 4, **caractérisé en ce que** l'étage mélangeur (2) comporte un multiplieur dont une première entrée (74) est reliée à une antenne (7) de réception d'une porteuse RF dont l'expression est :

$$S_{RF}(t) = S_p(t) \, Cos \, \omega.t + S_q(t) \, Sin \, \omega.t$$

où Sp(t) et Sq(t)
représentent respectivement une composante en phase et une composante en quadrature d'un signal QPSK ou d'un signal QAM, une deuxième entrée (78) dudit multiplieur (72) est reliée au circuit PLL (4) délivrant un signal $S_{lo}(t)$ de pulsation $\omega_{Lo}$, ledit multiplieur (72) délivrant le signal $S_{FI}(T)$ via un moyen de filtrage (82).

6. Récepteur selon la revendication 3, **caractérisé en ce que** le bloc démodulateur (56) comporte un filtre demi-Nyquist (83) relié, d'une part, au deuxième convertisseur analogique-numérique (64), et d'autre part, à un premier multiplieur (84) et à un deuxième multiplieur (86), chacun desdits multiplieurs est relié à un moyen de mémorisation (100); le premier multiplieur (84) délivrant, via un filtre passe-bas, une composante en phase démodulée :

$$S_{Id}(t) = S_{FI}(t) \times 2 \, Cos \, (\omega_{FI}.t - \varphi_c(t))$$

et le deuxième multiplieur (86) délivrant, via un filtre passe-bas une composante en quadrature démodulée

$$S_{Qd}(t) = S_{FI}(t) \times 2 \, Sin \, (\omega_{FI}.t - \varphi_c(t)).$$

**Claims**

1. Digital receiver including a mixer stage (2) receiving a carrier S(t) and delivering to a demodulation stage (12) an intermediate-frequency signal $S_{FI}(t)$ obtained by combining the carrier received and a signal generated by a PLL circuit (4), **characterized in that** it furthermore includes a phase noise digital correction stage (14), said stage tapping off a noise signal $\varphi_n(t)$ generated by the PLL circuit (4) in the mixer stage (2) and compensating the said noise $\varphi_n(t)$ in the demodulation stage (12).

2. Receiver according to Claim 1, **characterized in that** the phase noise correction stage (14) includes a first analogue/digital converter (34), an input (36) of which is connected to an output (23) of a phase detector (22) integrated with the PLL circuit (4), and an output (42) of which is connected to a calculating module (44) intended for supplying the demodulation stage (12) with a signal $\varphi_c(t)$ for compensating the phase noise $\varphi_n(t)$.

3. Receiver according to Claim 2, **characterized in that** the demodulation stage (12) includes a second calculating module (50) intended for determining the phase $\omega_{FI}.T$ of the signal $S_{FI}(t)$, having a first output (52) connected to a first input (54) of a demodulator block (56) and a second output (58) connected to a subtractor (60); the said subtractor (60) receives the signal $\varphi_c(t)$ at an input (62) and delivers the difference $\Delta\varphi = \omega_{FI}.t - \varphi_c(t)$ to the demodulator block (56).

4. Receiver according to Claim 3, **characterized in that** the second calculating module (50) includes a second analogue/digital converter (64) associated with a filter (68).

5. Receiver according to Claims 1 to 4, **characterized in that** the mixer stage (2) includes a multiplier whose first input (74) is connected to an antenna (7) for receiving an RF carrier given by the expression:

$$S_{RF}(t) = S_p(t) \, \cos \omega.t + S_q(t) \, \sin \omega.t$$

or $S_p(t)$ and $S_q(t)$
respectively represent an in-phase component and a quadrature component of a QPSK signal or of a QAM signal, a second input (78) of the said multiplier (72) is connected to the PLL circuit (4) delivering a signal $S_{lo}(t)$ with angular frequency $\omega_{Lo}$, the said multiplier (72) delivering the signal $S_{FI}(t)$ via a filtering means (82).

6. Receiver according to Claim 3, **characterized in that** the demodulator block (56) includes a semi-Nyquist filter (83) connected, on the one hand, to the second analogue/digital converter (64) and, on the other hand, to a first multiplier (84) and to a second multiplier (86), each of the said multipliers is connected to a storage means (100); the first multiplier (84) delivering, via a low-pass filter, a demodulated in-phase component:

$$S_{Id}(t) = S_{FI}(t) \times 2 \, \cos (\omega_{FI}.t - \varphi_c(t))$$

and the second multiplier (86) delivering, via a low-pass filter, a demodulated quadrature component

$$S_{Qd}(t) = S_{FI}(t) \times 2 \, \sin (\omega_{FI}.t - \varphi_c(t)).$$

**Patentansprüche**

1. Digitalempfänger mit einer Mischstufe (2), die einen Träger S(t) empfängt und an eine Demodulationsstufe (12) ein Zwischenfrequenzsignal $S_{FI}(t)$ abgibt, das durch Kombination des empfangenen Trägers und eines von einer PLL-Schaltung (4) erzeugten Signals erzielt wird, **dadurch gekennzeichnet, dass** er ferner eine Stufe (14) für die digitale Entzerrung des Phasenrauschens aufweist, wobei die Stufe ein Rauschsignal $\varphi_n(t)$ abgreift, das von der PLL-Schaltung (4) in der Mischstufe (2) erzeugt wurde und das Rauschen $\varphi_n(t)$ in der Demodulationsstufe (12) kompensiert.

2. Empfänger nach Anspruch 1, **dadurch gekennzeichnet, dass** die Stufe (14) für die digitale Entzerrung des Phasenrauschens einen ersten Analog-Digital-Wandler (34) aufweist, von dem ein Eingang (36) mit einem Ausgang (23) eines in der PLL-Schaltung (4) integrierten Phasendetektors (22) verbunden ist, und ein Ausgang (42) mit einem Rechenmodul (44) verbunden ist, das dazu bestimmt ist, der Demodulationsstufe (12) ein Signal $\varphi_c(t)$ für die Kompensation des Phasenrauschens $\varphi_n(t)$ bereitzustellen.

3. Empfänger nach Anspruch 2, **dadurch gekennzeichnet, dass** die Demodulationsstufe (12) ein zweites Rechenmodul (50) aufweist, das dazu bestimmt ist, die Phase $\omega_{FI}.t$ des Signals $S_{FI}(t)$ zu bestimmen, mit einem ersten Ausgang (52), der mit einem ersten Eingang (54) eines Demodulationsblocks (56) verbunden ist, und einem zweiten Ausgang (58), der mit einem Subtrahierer (60) verbunden ist, wobei der Subtrahierer (60) das Signal $\varphi_c(t)$ an einem Eingang (62) empfängt und an den Demodulationsblock (56) die Differenz $\Delta\varphi = \omega_{FI}.t - \varphi_c(t)$ abgibt.

4. Empfänger nach Anspruch 3, **dadurch gekennzeichnet, dass** das zweite Rechenmodul (50) einen zweiten, einem Filter (68) zugehörigen Analog-Digital-Wandler (64) aufweist.

5. Empfänger nach den Ansprüchen 1 bis 4, **dadurch gekennzeichnet, dass** die Mischstufe (2) einen Multiplikator aufweist, von dem ein erster Eingang (74) mit einer Antenne (7) für den Empfang eines Träger RF verbunden ist, dessen Ausdruck lautet:

$$S_{RF}(t) = S_p(t) \; \text{Cos} \; \omega.t + S_q(t) \; \text{Sin} \; \omega.t,$$

wobei Sp(t) und Sq(t)
eine Phasenkomponente beziehungsweise eine Quadraturkomponente eines QPSK- oder QAM-Signals darstellen, wobei ein zweiter Eingang (78) des Multiplikators (72) mit der PLL-Schaltung (4) verbunden ist, die ein Impulssignal $S_{lo}(t)$ mit einer Frequenz $\omega_{Lo}$ abgibt, wobei der Multiplikator das Signal $S_{F1}(t)$ über ein Filtriermittel (82) abgibt.

6. Empfänger nach Anspruch 3, **dadurch gekennzeichnet, dass** der Demodulationsblock (56) ein Semi-Nyquist-Filter (83) aufweist, das zum einen mit dem zweiten Analog-Digital-Wandler (64) und zum anderen mit einem ersten Multiplikator (84) und einem zweiten Multiplikator (86) verbunden ist, wobei jeder der Multiplikatoren mit einem Speichermittel (100) verbunden ist, wobei der erste Multiplikator (84) über ein Tiefpassfilter eine phasendemodulierte Komponente

$$S_{ld}(t) = S_{F1}(t) \; \text{x} \; 2 \; \text{Cos} \; (\omega_{F1}.t - \varphi_C(t))$$

und der zweite Multiplikator (86) über ein Tiefpassfilter eine quadraturdemodulierte Komponente

$$S_{Qd}(t) = S_{F1}(t) \; \text{x} \; 2 \; \text{Sin} \; (\omega_{F1}.t - \varphi_C(t)).$$

abgeben.

**FIG.1**

**FIG.2**

$\theta\,ref\,(S)$

$\theta\,pd\,(S)$

$\theta\,amp\,(S)$

$\theta\,vco\,(S)$

Kpd

F(S)

Kvco/S

$\theta\,div\,(S)$

1/N

**FIG.3**

FIG.4